# FASCICULE DE BREVET EUROPEEN

(11) **EP 3 606 782 B1**
(45) Date de publication et mention de la délivrance du brevet: **18.10.2023**
(21) Numéro de dépôt: 18722651.9
(22) Date de dépôt: 27.03.2018
(51) Int. Cl.: B60K 11/08, G01S 13/93

(54) **DISPOSITIF DE RÉGULATION D'UN FLUX D'AIR POUR UNE ENTRÉE D'AIR D'UN MODULE DE FACE AVANT D'UN VÉHICULE AUTOMOBILE**
LUFTSTROMREGULIERUNGSVORRICHTUNG FÜR EINEN LUFTEINLASS EINES KRAFTFAHRZEUG-FRONTEND-MODULS
AIR FLOW REGULATING DEVICE FOR AN AIR INLET OF A MOTOR VEHICLE FRONT-END MODULE

(30) Priorité: 03.04.2017 FR 1752842
(43) Date de publication de la demande: 12.02.2020
(73) Titulaire: Valeo Systemes Thermiques, 78322 Le Mesnil Saint-Denis Cedex (FR)
(72) Inventeur: GERBER, Sylvain, 78322 Le Mesnil Saint Denis Cedex (FR); NORÉ, Thomas, 78322 Le Mesnil Saint Denis Cedex (FR)
(74) Mandataire: Valeo Systèmes Thermiques
(86) Numéro de dépôt international: PCT/FR2018/050748
(87) Numéro de publication internationale: WO 2018/185399

(56) Documents cités:
- WO-A1-2016/198304
- DE-A1-102014 108 575
- US-A1- 2004 190 985
- US-A1- 2013 081 785

## Description

L'invention concerne un dispositif de régulation d'un flux d'air pour une entrée d'air d'un module de face avant d'un véhicule automobile ainsi qu'un véhicule automobile comprenant un tel dispositif de régulation.

Les faces avant de véhicules automobiles sont généralement composées d'une entrée d'air principale ou de deux entrées d'air, dites voie haute et voie basse, séparées par une poutre pare-choc. Derrière cette poutre pare-choc sont généralement placés les échangeurs de chaleur du véhicule automobile, comme par exemple celui utilisé pour la climatisation de l'habitacle.

Un panneau de volets correspondant à un dispositif de régulation du flux d'air est également généralement monté à l'arrière des entrées d'air du véhicule.

Les volets sont formés de lamelles montées pivotantes transversalement sur un cadre support. L'inclinaison des volets peut être pilotée entre une position verticale de fermeture bloquant le passage de l'air et plusieurs positions intermédiaires jusqu'à une position horizontale d'ouverture où un flux d'air maximum peut circuler.

Un dispositif de régulation du flux selon le préambule de la revendication 1 est notamment décrit dans le document US2013/081785.

Lorsque le panneau de volets est en position de fermeture, le véhicule présente un meilleur coefficient de pénétration de l'air, ce qui permet de diminuer la consommation de carburant et l'émission de CO₂. En outre, les volets pilotés sont agencés devant un dispositif d'échange thermique, ce qui permet en position de fermeture, d'accélérer la montée en température des échangeurs en phase de chauffage en diminuant également la consommation du véhicule et donc l'émission de CO₂.

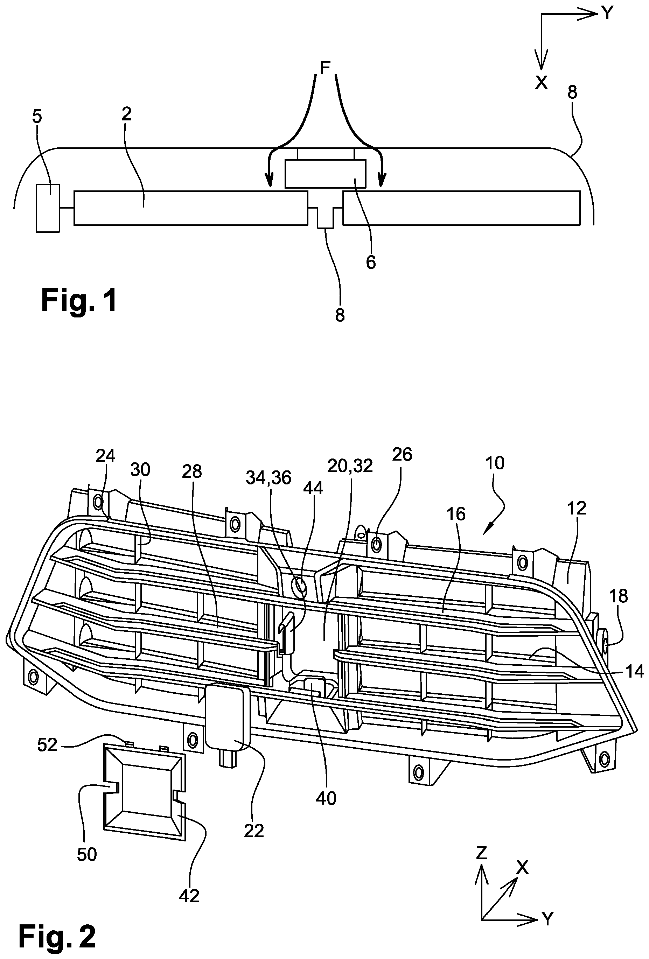

Cependant, la place disponible sous capot entre la poutre pare-choc et les échangeurs thermiques est relativement réduite, ce qui peut compliquer l'intégration du panneau de volets pilotés avec d'autres composants, tels que le radar électrique d'aide au stationnement. En effet, comme illustré à la figure 1 représentant un dispositif de régulation d'air selon l'art antérieur avec un ensemble de volets 2 et une bielle permettant le pivotement simultané des volets 2 induit par l'actionneur 5, le radar électrique 6 d'aide au stationnement est généralement intégré ou associé à la calandre 8 du véhicule afin d'être au plus proche de l'avant du véhicule. Toutefois un tel agacement augmente la taille du dispositif de régulation dans une direction longitudinale X. De plus, le radar 6 perturbe l'écoulement du flux d'air F et crée ainsi des turbulences, l'écoulement de l'air n'étant pas laminaire cela réduit les capacités de refroidissement des échangeurs de chaleur, lorsque les volets sont en position d'ouverture.

Ainsi, un des buts de la présente invention est de proposer un dispositif de régulation du flux d'air permettant de mieux optimiser l'espace disponible sous le capot du véhicule. Un autre but de la présente invention est d'améliorer l'efficacité du dispositif de régulation du flux d'air lorsque les volets d'obturation sont en position d'ouverture.

À cet effet, l'invention a pour objet un dispositif de régulation d'un flux d'air pour une entrée d'air d'un module de face avant d'un véhicule automobile selon les caractéristiques de la revendication 1.

On peut ainsi obtenir un dispositif de régulation du flux d'air dont la forme peut suivre celle des éléments situés devant lui, tels que la poutre pare-choc, la calandre ou d'autres éléments de renforts du véhicule en étant rapproché au plus près des entrées d'air du véhicule, ce qui permet d'augmenter l'espace disponible sous capot.

L'absence d'obstacle ainsi que la distance augmentée entre le dispositif de régulation du flux d'air et les échangeurs thermiques situés en aval permet d'obtenir un flux d'air moins turbulent, plus laminaire, plus rapide et donc plus efficace pour le refroidissement des échangeurs thermiques.

Egalement, l'augmentation de l'espace sous-capot donne de la place pour agencer des autres composants du véhicule entre le dispositif d'échangeurs thermiques et le dispositif de régulation du flux d'air, tel qu'un klaxon.

Selon une ou plusieurs caractéristiques du panneau de volets, prise seule ou en combinaison, propose que :
- le cadre support comprend ledit logement destiné à recevoir le composant électronique de détection ;
- le boîtier comprend un couvercle de manière à définir avec le boîtier un espace fermé dans lequel est compris le composant électronique de détection, ledit boîtier comprenant une ouverture par laquelle la connectique du composant électronique de détection est apte à traverser ;
- le cadre support est apte à être fixé à une calandre ;
- le dispositif comprend en outre un logement pour une caméra de vision ;
- le boitier comprend des moyens de fixations pour retenir le composant électronique de détection ;
- une bielle est agencée de part et d'autre du composant électronique de détection ;
- le composant électronique de détection est disposé entre deux volets d'obturation;
- un actionneur est disposé entre deux volets d'obturation, à proximité du composant électronique de détection, au centre du dispositif de régulation du flux d'air et configuré pour piloter le positionnement des volets d'obturation ;
- le composant électronique de détection correspond à un capteur de positionnement du véhicule ;
- le composant électronique de détection correspond à un radar d'aide au stationnement, à une caméra de vision, ou à tout autre capteur pouvant détecter et fournir une ou plusieurs informations sur l'environnement du véhicule ;
- le composant électronique de détection est dépourvue d'élément mobile d'actionnement des volets d'obturation du dispositif de régulation ;
- le composant électronique de détection permet de délivrer des informations sur l'environnement du véhicule à l'unité de commande électronique (ECU) du véhicule.

L'invention concerne également un véhicule automobile comprenant une calandre et une entrée d'air ainsi qu'un dispositif de régulation d'un flux d'air tel que décrit ci-dessus, les volets d'obturation prolongeant la continuité de la calandre lorsqu'ils sont en position d'ouverture.

D'autres caractéristiques et avantages de l'invention apparaîtront à la lecture de la description qui va suivre. Celle-ci est purement illustrative et doit être lue en regard des dessins annexés sur lesquels :
La figure 1 illustre l'avant d'un véhicule selon une vue de haut avec un dispositif de régulation de l'entrée d'air et d'un radar d'aide au stationnement selon l'art antérieur.
La figure 2 illustre l'avant d'un dispositif de régulation selon l'invention en association avec une calandre selon une vue en perspective.
La figure 3 illustre l'arrière d'un dispositif de régulation selon l'invention en association avec une calandre selon une vue en perspective.

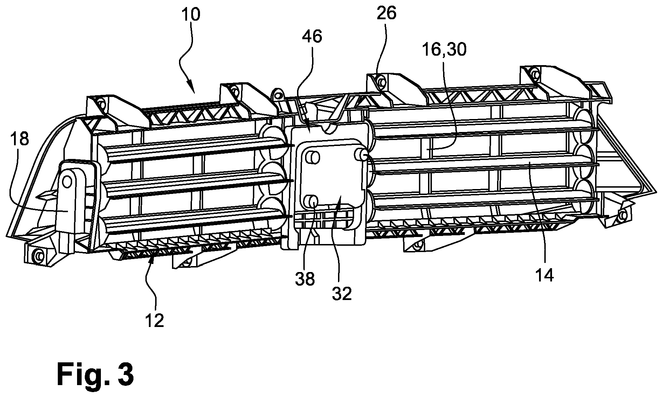

Le dispositif de régulation 10 selon la présente invention tel qu'illustré sur les figures 2 et 3 comprend un cadre support 12 et un ensemble de volets d'obturation 14, ici au nombre de six, répartis en deux sous-ensembles regroupant trois volets d'obturation 14 agencé de part et d'autre du logement 20 destiné à recevoir le composant électronique de détection 22 qui seront décrit ultérieurement.

L'invention ne se limite pas au nombre de volets présents dans le dispositif. En effet, il est envisageable d'avoir un système avec un premier volet d'obturation 14 et un second volet d'obturation 14 recouvrant à eux l'intégralité de la surface d'entrée d'air. Le dispositif comprend un ensemble de volets d'obturation identiques. Ceci facilite sa construction.

Le dispositif de régulation 10 s'étend selon une direction longitudinale (X), transversale (Y) et verticale (Z), par exemple par rapport aux axes du véhicule, comme représenté par les axes sur la figure 1.

Le cadre support 12 correspond à un châssis avec deux côtés longitudinaux et deux côtés latéraux pour une épaisseur donnée. Le cadre de support 12 a une forme rectangulaire, ici en forme de trapèze, si bien que les côtés longitudinaux sont plus grands que les côtés latéraux. Bien évidemment, l'invention ne se limite pas à la forme du cadre support 12, ainsi on pourrait envisager un cadre support de forme ovale, semi-elliptique ou toute autre forme polygonale (en losange, pentagone, hexagone, etc.). Le dispositif de régulation 10 est agencé de sorte que l'ensemble des volets d'obturation 14 ainsi que logement 20 destiné à recevoir le composant électronique de détection 22, recouvrent l'intégralité de la surface intérieure du cadre de support 12. Le cadre support 12 présente une pluralité de paliers dans lesquels sont introduits des pions ou doigts de pivotement des volets d'obturation 14.

Chaque volet d'obturation 14 comprend un axe de rotation permettant ainsi, par rotation, d'ouvrir et de fermer ledit volet. Le mouvement de rotation des volets d'obturation 14 est induit par un actionneur 18. Ouvrir un volet d'obturation 14 revient à le placer (par rotation) de manière à ce qu'il s'oppose le moins possible au passage du flux d'air F en l'orientant de manière appropriée, ici de manière horizontale (dans un plan défini par les directions XY). Fermer un volet d'obturation 14 revient à le placer de manière à ce qu'il s'oppose au maximum à l'écoulement du flux d'air F, en coopération avec les autres volets d'obturation 14, en l'orientant de manière appropriée, ici de manière verticale (dans un plan défini par les directions YZ). Les axes de rotation des volets d'obturation 14 sont parallèles les uns aux autres. Ainsi, les rotations appliquées à tous les volets d'obturation 14 sont toutes des rotations selon un même axe, à une translation près.

Lorsque les volets d'obturation 2 sont en position d'ouverture comme représenté sur les figures 2,3, à savoir qu'ils s'étendent selon une direction longitudinale (X) et transversale (Y), l'entrée d'air est dégagée et le flux d'air extérieur peut passer à travers le passage du cadre support 12. Lorsque les volets d'obturation 14 sont en position de fermeture, c'est-à-dire qu'ils s'étendent selon une direction transversale (Y) et verticale (Z), par exemple par rapport aux axes du véhicule, l'entrée d'air est obturée et l'air ne peut pas franchir le cadre support 12, en effet, dans cette position, les volets d'obturation 14 constituent ainsi un obstacle qui s'oppose, par sa surface frontale, à la circulation du flux d'air F. Bien évidemment, les volets d'obturations 14 sont aptes à adopter toute position intermédiaire.

Autrement dit, le dispositif de régulation 10 est configuré pour passer d'une configuration de fermeture où les volets d'obturation 14 obturent intégralement le passage du flux d'air F à une configuration d'ouverture où les volets d'obturation 14 sont positionnés de manière à laisser passer le flux d'air F avec un débit maximal.

Le dispositif de régulation 10 est assujetti à une grille ou calandre 16 du véhicule automobile. La calandre 16 correspond à une grille ornementale située à l'avant du véhicule automobile au niveau de l'entrée d'air servant à embellir l'aspect extérieur du véhicule tout en protégeant les échangeurs thermiques et autres composants du compartiment moteur d'éléments extérieurs (par exemple une branche d'arbre,...). Le dispositif de régulation 10, en particulier le cadre support 12, est apte à se fixer à la calandre 16. Pour cela, le cadre support 12 comprend des moyens de fixation 24, tels que des clips, pour se fixer à la calandre 16. Le dispositif de régulation 10, en particulier le cadre support 12, est également apte à se fixer au bouclier du véhicule automobile (non illustré). Pour cela, le cadre support 12 comprend des moyens de fixation 26, tels que des trous taraudés pour une vis ou tige filetée ou des clips, pour se fixer au bouclier du véhicule automobile.

La calandre 16 correspond à une grille avec un quadrillage, de manière à laisser le flux d'air s'écouler tout en empêchant des corps externes solides venir à l'intérieur du compartiment moteur. Pour cela, la calandre 16 comprend des barres horizontales 28 s'étendant sur la largeur (plan transversal XY) de l'entrée d'air et des barres verticales 30 s'étendant sur la hauteur (plan vertical XZ) de l'entrée d'air. Les volets d'obturation 14 sont agencés de manière à prolonger la continuité de la calandre 16 lorsqu'ils sont en position d'ouverture, notamment à prolonger la continuité des barres horizontales 28 de la calandre 16.

Chaque volet d'obturation 14 comprend un bord d'attaque et un bord de fuite par rapport à l'écoulement de l'air. Le bord d'attaque du volet d'obturation 14 est la section avant du profil aérodynamique que constitue le volet d'obturation 14. Le bord de fuite est la partie arrière du profil du volet d'obturation 14, le bord d'attaque vient au contact de la calandre 16 lorsque le dispositif de régulation 10 est en position d'ouverture.

Le dispositif de régulation 10, et notamment le cadre support 12, comprend un logement 20 destiné à recevoir un composant électronique de détection 22. Ce logement 20 correspond à un espace agencé au sein de la structure du cadre de support 12 ou plus précisément à un boîtier 32 formant continuité de matière avec le cadre support 12, définissant ainsi un espace creux dans lequel peut être compris , ou inséré, le composant électronique de détection 22. Selon le mode de réalisation illustré ici, on entend que le boîtier 32 est assemblé directement au sein du cadre support 12, ou autrement dit aucune platine intermédiaire n'est disposée entre le cadre support 12 et le composant électronique de détection 22.

Le cadre support 12 et le composant électronique de détection 22 comportent respectivement de moyens de fixation 34 complémentaires qui permettent un assemblage direct sans passer par l'intermédiaire d'une platine de fixation intermédiaire, la forme des pièces en contact, notamment du cadre support 12 et du composant électronique de détection 22, permettant un tel assemblage.

L'assemblage direct du composant électronique de détection 22 sur le cadre support 12 est réalisé par l'intermédiaire d'au moins un moyen de positionnement à savoir le boîtier 32 qui définit un espace creux dans lequel le composant électronique de détection 22 peut être correctement positionné et au moins un moyen de fixation 34 afin de maintenir le composant électronique de détection 22 au sein du logement 20, ou boitier 32. Le boîtier 32 peut en outre comprendre un détrompeur (non illustré) ou poka-yoke afin de s'assurer que le composant électronique de détection 22 soit correctement installé au sein du boîtier 32.

Le boîtier 32 a pour fonction principale de positionner correctement le composant électronique de détection 22 au sein du cadre support 12 pour faire coopérer par la suite les moyens de fixation 34. On pourra noter que le boîtier 32 peut en outre avoir, une fois les moyens de fixation 34 assemblés, une fonction de maintien et de fixation empêchant le composant électronique de détection 22 d'avoir certains degrés de liberté de mouvement.

Les moyens de fixation 34 comprennent, par exemple, un ensemble clip ou crochet et un épaulement. Un tel emboîtement élastique est tel que le cadre support 12 comprend un clip ou un crochet 36 pouvant s'accrocher à une surface du composant électronique de détection 22, par exemple par l'intermédiaire d'un épaulement présent sur le composant électronique de détection 22, afin de maintenir ce dernier dans une position fixe, ou inversement.

Les moyens de fixation 34 comprennent également un ensemble trou taraudé et vis filetée, comme illustré à la figure 3, le cadre support 12 et le composant électronique de détection 22 présentent des trous taraudés de manière à y insérer des vis 38 afin de fixer solidement le composant électronique de détection 22 au cadre support 12.

Les moyens de fixation 34 comprennent en outre un clip ou crochet 36 pouvant s'accrocher à la calandre 16 afin de maintenir l'ensemble calandre 16 et dispositif de régulation 10 de manière solide.

Il est aussi possible de combiner plusieurs moyens de fixation 34 tels que des vis et des clips ceci de manière à avoir un assemblage amovible, notamment pour le remplacement et/ou réparation du composant électronique de détection 22. Les moyens de fixation 34 étant conçus de manière à être démonté sans détérioration importante du composant électronique de détection 22 et/ou du cadre support 12, de sorte qu'ils puissent, notamment le cadre support 12, être réutilisés pour recréer un autre assemblage.

Le boitier 32 selon les modes de réalisation illustré en figure 2 et 3 fait partie intégrante de la structure du cadre support 12, si bien qu'il n'est pas possible de les dissocier sans avoir de détérioration de l'ensemble.

Toutefois selon un mode de réalisation non illustré, il est possible de concevoir un boitier comme une pièce rapportée, distincte, et présentant des moyens de fixation pour être assujetti au dispositif de régulation 10, notamment au cadre support 12.

Le boîtier 32 comprend en outre une ouverture 40 par laquelle la connectique du composant électronique de détection 22 est apte à traverser afin d'être alimentée en courant ainsi que de pouvoir délivrer des informations sur l'environnement du véhicule à l'unité de commande électronique (ECU).

Le composant électronique de détection 22 correspond à un capteur de positionnement du véhicule. En particulier, le composant électronique de détection 22 est choisi parmi un radar d'aide au stationnement, une caméra de vision, un radar de proximité, un radar ou laser de régulation de distance, ou à tout autre capteur pouvant détecter et fournir une ou plusieurs informations sur l'environnement du véhicule. Le composant électronique de détection 22 permet notamment de délivrer ces informations à l'unité de commande électronique (ECU) du véhicule.

Le composant électronique de détection 22 est dépourvu d'élément mobile d'actionnement des volets d'obturation 14 du dispositif de régulation 10.

Le boîtier 32 et le composant électronique de détection 22, une fois installé, sont agencés au centre du dispositif de régulation 10 si bien qu'un premier volet d'obturation 14 et un second volet d'obturation 14 sont agencé de part et d'autre du composant électronique de détection 22 et du boîtier 32 comme illustré sur les figures 2 et 3.

Le dispositif de régulation 10 comprend en outre un couvercle 42 pouvant se fixer soit à la calandre 16, soit au boîtier 32, de manière à définir avec le boîtier 32 un espace fermé dans lequel est compris le composant électronique de détection 22. Un tel couvercle 42 permet de protéger le composant électronique de détection 22 d'éléments extérieurs (gravier, branches d'arbres,...). Le couvercle 42 est fixé à la calandre 16 ou au boîtier 32 par l'intermédiaire de moyens de fixation 52 tels que des vis ou des clips. Le couvercle 42 comprend en outre des encoches 50 de forme complémentaire à la calandre 16 ou à des protubérances agencées sur le boîtier 32.

Le dispositif de régulation 10 comprend en outre un logement 44 apte à accueillir une caméra de vision. Il est ainsi possible de combiner les informations obtenues par les deux composants électroniques et avoir ainsi des données plus sûres quant à l'environnement du véhicule. Il est également possible d'agencer la caméra de vision directement sur la calandre 16.

Afin de garantir la rotation simultanée des volets d'obturation 14, le dispositif de régulation comprend une bielle 46 illustrée sur la figure 3 agencée de par et d'autre du composant électronique de détection 22 et du boitier 32. Cette bielle 46 mobile selon un mouvement en translation dans la direction verticale (Z), permet de solidariser les différents volets d'obturation 14 de manière simple et peu coûteuse en utilisant peu de pièces. En effet, l'actionneur 18 induisant la rotation d'un des volets d'obturation 14, provoque la translation de la bielle 46 qui entraîne à son tour la rotation des autres volets d'obturation 14 liées à la bielle 46.

Comme illustré en figure 3, la bielle 46 correspond à un cadre rectangulaire avec une cavité en son centre de manière à ce que le boîtier 32 puisse être agencé à l'intérieur de cette cavité de manière à ce que la bielle 46 soit apte à se déplacer en translation sans être gêné dans son mouvement par le boitier 32.

L'invention concerne également un véhicule comprenant la calandre 16 et une entrée d'air. Le véhicule comprend un dispositif de régulation 10 tel que décrit ci-dessus, les volets d'obturation 14 prolongeant la continuité de la calandre 16 lorsqu'ils sont en position d'ouverture.

Il doit être bien entendu toutefois que ces exemples de réalisation sont donnés à titre d'illustration de l'objet de l'invention. L'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention et notamment toute combinaison des différents modes de réalisation décrits précédemment.

## Revendications

1. Dispositif de régulation (10) d'un flux d'air pour une entrée d'air d'un module de face avant d'un véhicule automobile comprenant un cadre support (12) dans lequel est installé une pluralité de volets d'obturation (14) pivotants entre une position de fermeture et une position d'ouverture, **caractérisé en ce que** le dispositif de régulation (10) comprend un logement (20) destiné à recevoir un composant électronique de détection (22), le logement (20) étant défini par un boîtier (32) comprenant un espace creux dans lequel est compris le composant électronique de détection (22).

2. Dispositif (10) selon la revendication 1, dans lequel le cadre support (12) comprend ledit logement (20) destiné à recevoir le composant électronique de détection (22).

3. Dispositif (10) selon l'une des revendications précédentes, dans lequel le boîtier (32) comprend un couvercle (42) de manière à définir avec le boîtier (32) un espace fermé dans lequel est compris le composant électronique de détection (22), ledit boîtier (32) comprenant une ouverture (40) par laquelle la connectique du composant électronique de détection (22) est apte à traverser.

4. Dispositif (10) selon l'une des revendications précédentes, dans lequel le cadre support (12) est apte à être fixé à une calandre (16).

5. Dispositif (10) selon l'une des revendications précédentes, comprenant en outre un logement (44) pour une caméra de vision.

6. Dispositif (10) selon l'une des revendications précédentes, les revendications 5 et 6 étant prises en combinaison avec l'une des revendications 3 ou 4, dans lequel le boitier (32) comprend des moyens de fixations (34, 36) pour retenir le composant électronique de détection (22).

7. Dispositif (10) selon l'une des revendications précédentes, dans lequel une bielle (46) est agencée de part et d'autre du composant électronique de détection (22).

8. Dispositif (10) selon l'une des revendications précédentes, dans lequel le composant électronique de détection (22) est disposé entre deux volets d'obturation (14).

9. Véhicule comprenant une calandre (16) et une entrée d'air **caractérisé en ce qu'**il comprend un dispositif de régulation (10) selon l'une des revendications précédentes, les volets d'obturation (14) prolongeant la continuité de la calandre (16) lorsqu'ils sont en position d'ouverture.

## Patentansprüche

1. Vorrichtung zur Regelung (10) eines Luftstroms für einen Lufteinlass eines Frontend-Moduls für ein Kraftfahrzeug, die einen Halterahmen (12) umfasst, in dem eine Mehrzahl von Verschlussklappen (14) angebracht ist, die zwischen einer Schließposition und einer Öffnungsposition schwenkbar sind, **dadurch gekennzeichnet, dass** die Regulierungsvorrichtung (10) eine Aufnahme (20) umfasst, die dazu bestimmt ist, eine elektronische Detektionskomponente (22) aufzunehmen, wobei die Aufnahme (20) von einem Gehäuse (32) mit einem Hohlraum definiert ist, in dem die elektronische Detektionskomponente (22) enthalten ist.

2. Vorrichtung (10) nach Anspruch 1, wobei der Halterahmen (12) die Aufnahme (20) umfasst, die dazu bestimmt ist, die elektronische Detektionskomponente (22) aufzunehmen.

3. Vorrichtung (10) nach einem der vorhergehenden Ansprüche, wobei das Gehäuse (32) einen Deckel (42) umfasst, um mit dem Gehäuse (32) einen geschlossenen Raum zu definieren, in dem die elektronische Detektionskomponente (22) enthalten ist, wobei das Gehäuse (32) eine Öffnung (40) umfasst, durch welche die Verbindungstechnik der elektronischen Detektionskomponente (22) hindurchgehen kann.

4. Vorrichtung (10) nach einem der vorhergehenden Ansprüche, wobei der Halterahmen (12) an einem Kühlergrill (16) befestigt werden kann.

5. Vorrichtung (10) nach einem der vorhergehenden Ansprüche, ferner umfassend eine Aufnahme (44) für eine Sichtkamera.

6. Vorrichtung (10) nach einem der vorhergehenden Ansprüche, wobei die Ansprüche 5 und 6 mit einem der Ansprüche 3 oder 4 kombiniert sind, wobei das Gehäuse (32) Befestigungsmittel (34, 36) umfasst, um die elektronische Detektionskomponente (22) zu halten.

7. Vorrichtung (10) nach einem der vorhergehenden Ansprüche, wobei ein Pleuel (46) beiderseits der elektronischen Detektionskomponente (22) angeordnet ist.

8. Vorrichtung (10) nach einem der vorhergehenden Ansprüche, wobei die elektronische Detektionskomponente (22) zwischen zwei Verschlussklappen (14) angeordnet ist.

9. Fahrzeug mit einem Kühlergrill (16) und einem Lufteinlass, **dadurch gekennzeichnet, dass** es eine Regulierungsvorrichtung (10) nach einem der vorhergehenden Ansprüche umfasst, wobei die Verschlussklappen (14) die Kontinuität des Kühlergrills (16) verlängern, wenn sie sich in Öffnungsposition befinden.

## Claims

1. Device (10) for regulating an air stream for an air inlet of a front face module of a motor vehicle, comprising a support frame (12) in which is installed a plurality of shut-off flaps (14) pivoting between a closed position and an open position, **characterized in that** the regulating device (10) comprises a recess (20) intended to receive an electronic detection component (22), the recess (20) being defined by a housing (32) comprising a hollow space in which the electronic detection component (22) is contained.

2. Device (10) according to Claim 1, wherein the support frame (12) comprises said recess (20) intended to receive the electronic detection component (22).

3. Device (10) according to either of the preceding claims, wherein the housing (32) comprises a cover (42) so as to define with the housing (32) a closed space inside which the electronic detection component (22) is contained, said housing (32) comprising an opening (40) through which the connector of the electronic detection component (22) is able to pass.

4. Device (10) according to one of the preceding claims, wherein the support frame (12) is able to be fastened to a grille (16) .

5. Device (10) according to one of the preceding claims, also comprising a recess (44) for a viewing camera.

6. Device (10) according to one of the preceding claims, Claims 5 and 6 being taken in combination with either of Claims 3 and 4, wherein the housing (32) comprises fastening means (34, 36) for retaining the electronic detection component (22).

7. Device (10) according to one of the preceding claims, wherein a link (46) is arranged on either side of the electronic detection component (22).

8. Device (10) according to one of the preceding claims, wherein the electronic detection component (22) is disposed between two shut-off flaps (14).

9. Vehicle comprising a grille (16) and an air inlet, **characterized in that** it comprises a regulating device (10) according to one of the preceding claims, the shut-off flaps (14) extending the continuity of the grille (16) when they are in the open position.
